(19) Europäisches Patentamt
European Patent Office
Office européen des brevets

(11) EP 3 738 745 A1

(12) EUROPEAN PATENT APPLICATION

(43) Date of publication:
**18.11.2020 Bulletin 2020/47**

(21) Application number: **19174118.0**

(22) Date of filing: **13.05.2019**

(51) Int Cl.:
***B29C 64/106*** *(2017.01)* ***B33Y 10/00*** *(2015.01)*
***B33Y 70/00*** *(2020.01)* ***C08L 43/04*** *(2006.01)*
***C08L 71/02*** *(2006.01)* ***C08L 101/10*** *(2006.01)*
***C09K 3/10*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Henkel AG & Co. KGaA**
**40589 Düsseldorf (DE)**

(72) Inventors:
- **Dr. Andrea GUTACKER**
  **D-40764 Langenfeld (DE)**
- **Sebastien LANAU**
  **D-40237 Düsseldorf (DE)**
- **Dr. Johann KLEIN**
  **D-40593 Düsseldorf (DE)**
- **Dr. Claudia MECKEL-JONAS**
  **D-40597 Düsseldorf (DE)**

(74) Representative: **Viering, Jentschura & Partner mbB**
**Patent- und Rechtsanwälte**
**Hamborner Straße 53**
**40472 Düsseldorf (DE)**

# (54) REACTIVE PRINTABLE COMPOSITION WITH ELASTOMERIC PROPERTIES

(57) The present invention relates to moisture curable compositions based on silane-terminated polymers in paste form that can be used as 3D printing materials and provide isotropic and elastomeric properties.

The invention further relates to the use thereof as 3D printing materials and printing methods using said compositions.

EP 3 738 745 A1

## Description

The present invention lies in the field of moisture curable compositions for 3D printing applications. In particular, the invention relates to moisture curable compositions based on silane-terminated polymers that can be used as pasty 3D printing materials and provide isotropic and elastomeric properties as well as their use as 3D printing materials and printing methods using said compositions.

In 3D printing applications, also referred herein as additive manufacturing, a wide variety of polymeric materials are used. However, to date there are no elastomeric printable compositions available.

While one-component, moisture-curing adhesives and sealants, in particular so-called silane-terminated adhesives and sealants, have for years played an important part in numerous technical applications, since compared with polyurethane adhesives and sealants, the silane-terminated adhesives and sealants have the advantage that they are free from isocyanate groups and provide for a broad range of adhesion to a wide variety of substrates without any surface pretreatment using primers, such polymer systems have so far not been described for 3D printing applications.

As silane-modified polymer compositions provide for a variety of interesting properties, such as being isotropic and chemically curable to provide elastomers, it would be highly advantageous to have silane-modified polymer compositions available that are useful as 3D printing materials. In addition, such compositions would provide for the advantage that they do not deform under elevated temperatures - in contrast to hotmelts - and can be combined with a variety of additives to tune the properties of the obtained product, such as mechanical properties, fire resistance, thermal conductivity, electrical conductivity, heat resistance, UV resistance, weather resistance, etc.

For being useful in 3D printing applications, these compositions have to be printable with suitable printing apparatuses, for example by extrusion processes, while at the same time providing sufficient stability to keep the desired form before and during the curing reaction.

The present invention solves this need by providing a moisture curable 3D printing paste composition with isotropic and elastomeric properties that is printable and sufficiently stable to be used in additive manufacturing of 3D objects.

In a first aspect, the present invention thus relates to a moisture-curable printable composition comprising

a) at least one polymer having at least one terminal group of the general formula (I)

$$-A_n-R-SiXYZ \qquad (I),$$

wherein

A is a divalent bonding group containing at least one heteroatom,
R is selected from divalent hydrocarbon residues having 1 to 12 carbon atoms,
X, Y, Z are, independently of one another, selected from the group consisting of a hydroxyl group and $C_1$ to $C_8$ alkyl, $C_1$ to $C_8$ alkoxy, and $C_1$ to $C_8$ acyloxy groups, wherein X, Y, Z are substituents directly bound with the Si atom or the two of the substituents X, Y, Z form a ring together with the Si atom to which they are bound, and at least one of the substituents X, Y, Z is selected from the group consisting of a hydroxyl group, $C_1$ to $C_8$ alkoxy and $C_1$ to $C_8$ acyloxy groups, and
n is 0 or 1; and

b) optionally at least one compound of the general formula (II)

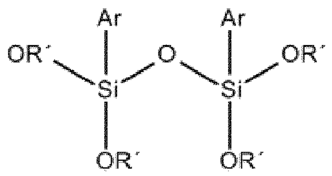 (II)

,

wherein R' is same or different and is, independently from one another, selected from the group consisting of a hydrogen atom and hydrocarbon residues having 1 to 12 carbon atoms, and Ar is selected from aryl groups;
c) at least one filler; and
d) at least one catalyst,

wherein the composition is in form of a paste and has a yield stress of greater than 50, preferably 100 or more, more

preferably 150 or more.

In another aspect, the present invention also relates to the use of use of a moisture-curable printable composition as described herein as a 3D printing material.

In still another aspect, the invention also features a method for manufacturing a three-dimensional part by extruded filament fabrication, the method comprising:

(a) printing a moisture-curable printable composition according to the invention in a layer-by-layer manner to form the three-dimensional part;
(b) curing the printed layers of the moisture-curable printable composition to obtain the three-dimensional part.

A "composition" is understood in the context of the present invention as a mixture of at least two ingredients.

The term "curable" is to be understood to mean that, under the influence of external conditions, in particular under the influence of moisture present in the environment and/or supplied for the purpose, the composition can pass from a relatively flexible state, optionally possessing plastic ductility, to a harder state. In general, the crosslinking can take place by means of chemical and/or physical influences, i.e. as well as the already mentioned moisture, for example, by the supply of energy in the form of heat, light or other electromagnetic radiation, but also by simply bringing the composition into contact with air, atmospheric moisture, water, or a reactive component. In the context of the present invention, "curable" predominantly relates to the property of the terminal silane groups of formula (I) to condensate. "Moisture-curable", as used herein, thus relates to curing under the influence of moisture, typically humidity from the surrounding air.

Provided reference is made to molecular weights of oligomers or polymers in the present application, the quantities, unless otherwise stated, refer to the number average, i.e., the $M_n$ value, and not to the weight average molecular weight.

"At least one," as used herein, refers to 1 or more, i.e., 1, 2, 3, 4, 5, 6, 7, 8, 9, or more. In regard to an ingredient, the term relates to the type of ingredient and not to the absolute number of molecules. "At least one polymer" thus means, for example, at least one type of polymer, i.e., that a type of polymer or a mixture of a number of different polymers can be used. Together with weight data, the term refers to all compounds of the given type, contained in the composition/mixture, i.e., that the composition contains no other compounds of this type beyond the given amount of the relevant compounds.

All percentage data, provided in connection with the compositions described herein, refer to % by weight, based in each case on the relevant mixture, unless explicitly indicated otherwise.

"Consisting essentially of", as used herein, means that the respective composition is composed mainly, i.e. by at least 50% by weight, for example at least 60, 70 or 80 %, of the referenced component(s), as described below.

"Alkyl," as used herein, refers to a saturated aliphatic hydrocarbon including straight-chain and branched-chain groups. The alkyl group preferably has 1 to 10 carbon atoms (if a numerical range, e.g., "1-10" is given herein, this means that this group, in this case the alkyl group, can have 1 carbon atom, 2 carbon atoms, 3 carbon atoms, etc., up to and including 10 carbon atoms). In particular, the alkyl can be an intermediate alkyl, which has 5 to 6 carbon atoms, or a lower alkyl, which has 1 to 4 carbon atoms, e.g., methyl, ethyl, n-propyl, isopropyl, butyl, isobutyl, tert-butyl, etc. The alkyl groups can be substituted or unsubstituted. "Substituted," as used in this connection, means that one or more carbon atoms and/or hydrogen atom(s) of the alkyl group are replaced by heteroatoms or functional groups. Functional groups that can replace the hydrogen atoms are selected particularly from =O, =S, -OH, -SH, $-NH_2$, $-N(C_{1-10}$ alkyl$)_2$, such as $-N(CH_3)_2$, $-NO_2$, -CN, -F, -Cl, -Br, -I, -COOH, $-CONH_2$, -OCN, -NCO, $C_{3-8}$ cycloalkyl, $C_{6-14}$ aryl, a 5-10-membered heteroaryl ring, in which 1 to 4 ring atoms independently are nitrogen, oxygen, or sulfur, and a 5-10-membered heteroalicyclic ring, in which 1 to 3 ring atoms are independently nitrogen, oxygen, or sulfur. Substituted alkyl includes, for example, alkylaryl groups. Heteroalkyl groups in which 1 or more carbon atoms are replaced by heteroatoms, particularly selected from O, S, N, and Si, are obtained by the replacement of one or more carbon atoms by heteroatoms. Examples of such heteroalkyl groups are, without limitation, methoxymethyl, ethoxyethyl, propoxypropyl, methoxyethyl, isopentoxypropyl, ethylaminoethyl, trimethoxypropylsilyl, etc. In various embodiments, substituted alkyl includes $C_{1-10}$ alkyl, preferably $C_{1-4}$ alkyl, such as propyl, substituted with $-N(C_{1-10}$ alkyl$)_2$, preferably N,N-dimethylamino or N,N-diethylamino.

"Alkenyl," as used herein, refers to an alkyl group, as defined herein, which consists of at least two carbon atoms and at least one carbon-carbon double bond, e.g., ethenyl, propenyl, butenyl, or pentenyl and structural isomers thereof such as 1- or 2-propenyl, 1-, 2-, or 3-butenyl, etc. Alkenyl groups can be substituted or unsubstituted. If they are substituted, the substituents are as defined above for alkyl. "Alkenyloxy" refers to an alkenyl group, as defined herein, that is linked via an -O- to the rest of the molecule. The respective term thus includes enoxy groups, such as vinyloxy ($H_2C$=CH-O-).

"Alkynyl," as used herein, refers to an alkyl group, as defined herein, which consists of at least two carbon atoms and at least one carbon-carbon triple bond, e.g., ethynyl (acetylene), propynyl, butynyl, or petynyl and structural isomers thereof as described above. Alkynyl groups can be substituted or unsubstituted. If they are substituted, the

substituents are as defined above for alkyl. "Alkylnyloxy" refers to an alkynyl group, as defined herein, that is linked via an -O- to the rest of the molecule.

A "cycloaliphatic group" or "cycloalkyl group," as used herein, refers to monocyclic or polycyclic groups (a number of rings with carbon atoms in common), particularly of 3-8 carbon atoms, in which the ring does not have a completely conjugated pi-electron system, e.g., cyclopropyl, cyclobutyl, cyclopentyl, cyclohexyl, cyclobutenyl, cyclopentenyl, cyclohexenyl, etc. Cycloalkyl groups can be substituted or unsubstituted. "Substituted," as used in this regard, means that one or more hydrogen atoms of the cycloalkyl group are replaced by functional groups. Functional groups that can replace the hydrogen atoms are selected particularly from =O, =S, -OH, -SH, $-NH_2$, $-NO_2$, -CN, -F, -Cl, -Br, -I, -COOH, $-CONH_2$, -OCN, -NCO, $C_{1-10}$ alkyl or alkoxy, $C_{2-10}$ alkenyl, $C_{2-10}$ alkynyl, $C_{3-8}$ cycloalkyl, $C_{6-14}$ aryl, a 5-10-membered heteroaryl ring, in which 1 to 4 ring atoms independently are nitrogen, oxygen, or sulfur, and a 5-10-membered heteroalicyclic ring, in which 1 to 3 ring atoms independently are nitrogen, oxygen, or sulfur. "Cycloalkyloxy" refers to a cycloalkyl group, as defined herein, that is linked via an -O- to the rest of the molecule.

"Aryl," as used herein, refers to monocyclic or polycyclic groups (i.e., rings that have neighboring carbon atoms in common), particularly of 6 to 14 carbon ring atoms which have a completely conjugated pi-electron system. Examples of aryl groups are phenyl, naphthalenyl, and anthracenyl. Aryl groups can be substituted or unsubstituted. If they are substituted, the substituents are as defined above for cycloalkyl. "Aryloxy" refers to an aryl group, as defined herein, that is linked via an -O- to the rest of the molecule.

A "heteroaryl" group, as used herein, refers to a monocyclic or polycyclic (i.e., rings that share an adjacent ring atom pair) aromatic ring, having particularly 5 to 10 ring atoms, where one, two, three, or four ring atoms are nitrogen, oxygen, or sulfur and the rest is carbon. Examples of heteroaryl groups are pyridyl, pyrrolyl, furyl, thienyl, imidazolyl, oxazolyl, isoxazolyl, thiazolyl, isothiazolyl, pyrazolyl, 1,2,3-triazolyl, 1,2,4-triazolyl, 1,2,3-oxadiazolyl, 1,2,4-oxadiazolyl, 1,2,5-oxadiazolyl, 1,3,4-oxadiazolyl, 1,3,4-triazinyl, 1,2,3-triazinyl, benzofuryl, isobenzofuryl, benzothienyl, benzotriazolyl, isobenzothienyl, indolyl, isoindolyl, 3H-indolyl, benzimidazolyl, benzothiazolyl, benzoxazolyl, quinolizinyl, quinazolinyl, phthalazinyl, quinoxalinyl, cinnolinyl, naphthyridinyl, quinolyl, isoquinolyl, tetrazolyl, 5,6,7,8-tetrahydroquinolyl, 5,6,7,8-tetrahydroisoquinolyl, purinyl, pteridinyl, pyridinyl, pyrimidinyl, carbazolyl, xanthenyl, or benzoquinolyl. Heteroaryl groups can be substituted or unsubstituted. If they are substituted, the substituents are as defined above for cycloalkyl. "(Hetero)aryl", as used herein, refers to both aryl and heteroaryl groups as defined herein. "Heteroaryloxy" refers to a heteroaryl group, as defined herein, that is linked via an -O- to the rest of the molecule.

A "heteroalicyclic group" or a "heterocycloalkyl group," as used herein, refers to a monocyclic or fused ring having 5 to 10 ring atoms, which contains one, two, or three heteroatoms, selected from N, O, and S, whereby the rest of the ring atoms are carbon. A "heterocycloalkenyl" group contains in addition one or more double bonds. The ring however has no completely conjugated pi-electron system. Examples of heteroalicyclic groups are pyrrolidinone, piperidine, piperazine, morpholine, imidazolidine, tetrahydropyridazine, tetrahydrofuran, thiomorpholine, tetrahydropyridine, and the like. Heterocycloalkyl groups can be substituted or unsubstituted. If they are substituted, the substituents are as defined above for cycloalkyl. "Heteroalicyclic" refers to a heteroalicyclic group, as defined herein, that is linked via an -O- to the rest of the molecule.

In preferred embodiments, the polymer a) has at least two terminal groups of the general formula (I).

The polymer having the at least one terminal group of the general formula (I) is preferably a polyether, a poly(meth)acrylic acid ester, or a polyurethane.

A "polyether" is understood to be a polymer in which the organic repeating units comprise ether functionalities C-O-C in the main chain. Polymers having lateral ether groups, such as cellulose ethers, starch ethers and vinyl ether polymers, as well as polyacetals such as polyoxymethylene (POM) are not included in the polyethers.

A "poly(meth)acrylic acid ester" is understood to be a polymer based on (meth)acrylic acid esters, which therefore has as a repeating unit the structural motif $-CH_2-CR^a(COOR^b)-$, where $R^a$ denotes a hydrogen atom (acrylic acid ester) or a methyl group (methacrylic acid ester) and $R^b$ denotes linear alkyl residues, branched alkyl residues, cyclic alkyl residues and/or alkyl residues comprising functional substituents, for example methyl, ethyl, isopropyl, cyclohexyl, 2-ethylhexyl or 2-hydroxyethyl residues.

A "polyurethane" is understood to be a polymer which has at least two urethane groups -NH-CO-O- in the main chain.

The polymer having at least one terminal group of the general formula (I) is particularly preferably a polyether. Polyethers have a flexible and elastic structure, with which compositions having excellent elastic properties can be produced. Polyethers are not only flexible in their backbone, but at the same time strong. Thus, for example, polyethers are not attacked or decomposed by water and bacteria, in contrast to, e.g., polyesters, for example.

The number average molecular weight $M_n$ of the polyether on which the polymer is based is preferably 2000 to 100,000 g/mol (daltons), particularly preferably at least 6000 g/mol and in particular at least 8000 g/mol. Number average molecular weights of at least 2000 g/mol are advantageous for the polyethers of the present invention, because compositions according to the invention based on polyethers with such a minimum molecular weight have significant film-forming properties. For example, the number average molecular weight $M_n$ of the polyether is 4000 to 100,000,

preferably 8000 to 50,000, particularly preferably 10,000 to 30,000 and in particular 10,000 to 25,000 g/mol. These molecular weights are particularly advantageous, since the corresponding compositions have a balanced ratio of viscosity (ease of processing), strength and elasticity.

Particularly advantageous viscoelastic properties can be achieved if polyethers having a narrow molecular weight distribution, and thus low polydispersity, are used. These can be produced, for example, by so-called double metal cyanide catalysis (DMC catalysis). Polyethers produced in this way are distinguished by a particularly narrow molecular weight distribution, by a high average molecular weight and by a very low number of double bonds at the ends of the polymer chains.

In a special embodiment of the present invention, the maximum polydispersity $M_w/M_n$ of the polyether on which the polymer is based is therefore 3, particularly preferably 1.7 and most particularly preferably 1.5.

The number average molecular weight $M_n$, as well as the weight average molecular weight $M_w$, is determined according to the present invention by gel permeation chromatography (GPC, also known as SEC) at 23°C using a styrene standard. The molecular weight can be determined by gel permeation chromatography (GPC) with tetrahydrofuran (THF) as the eluent according to DIN 55672-1:2007-08, preferably at 23°C or 35°C. Molecular weights of monomeric compounds are calculated based on the respective molecular formula and the known molecular weights of the individual atoms. These methods are known to one skilled in the art. The polydispersity is derived from the average molecular weights $M_w$ and $M_n$. It is calculated as PD = $M_w/M_n$.

The ratio $M_w/M_n$ (polydispersity) indicates the width of the molecular weight distribution and thus of the different degrees of polymerization of the individual chains in polydisperse polymers. For many polymers and polycondensates, a polydispersity value of about 2 applies. Strict monodispersity would exist at a value of 1. A low polydispersity of, for example, less than 1.5 indicates a comparatively narrow molecular weight distribution, and thus the specific expression of properties associated with molecular weight, such as e.g., viscosity. In particular, therefore, in the context of the present invention, the polyether on which the polymer A is based has a polydispersity ($M_w/M_n$) of less than 1.3.

In various other embodiments, the polymer having at least one terminal group of the general formula (I) can be a polyurethane obtainable by reacting at least i) a polyol or a mixture of two or more polyols and ii) a polyisocyanate or a mixture of two or more polyisocyanates.

A "polyol" is understood to be a compound which contains at least two OH groups, irrespective or whether the compound contains other functional groups. However, a polyol used in accordance with the present invention preferably contains only OH groups as functional groups or, if other functional groups are present, none of these other functional groups is reactive at least to isocyanates under the conditions prevailing during the reaction of the polyol(s) and polyisocyanate(s).

The polyols suitable for preparing the polyurethane polymers are preferably polyether polyols. The above descriptions of the molecular weight and polydispersity of the polyether also apply to the polyether polyol. The polyether polyol is preferably a polyalkylene oxide, particularly preferably polyethylene oxide and/or polypropylene oxide. In preferred embodiments, a polyether or a mixture of two polyethers are used.

The polyols to be used in accordance with the invention have an OH value of preferably about 5 to about 15 and, more preferably, of about 10. The percentage content of primary OH groups should be below about 20%, based on all the OH groups, and is preferably below 15%. In one particularly advantageous embodiment, the acid value of the polyethers used is below about 0.1, preferably below 0.05 and, more preferably, below 0.02.

Besides the polyethers, the polyol mixture may contain other polyols. For example, it may contain polyester polyols with a molecular weight of about 200 to about 30,000.

A "polyisocyanate" is understood to be a compound which has at least two isocyanate groups -NCO. This compound does not have to be a polymer, and instead is frequently a low molecular compound.

The polyisocyanates suitable for preparing the polyurethane according to the invention include ethylene diisocyanate, 1,4-tetramethylene diisocyanate, 1,4-tetramethoxybutane diisocyanate, 1,6-hexamethylene diisocyanate (HDI), cyclobutane-1,3-diisocyanate, cyclohexane-1,3- and -1,4-diisocyanate, bis(2-isocyanatoethyl)fumarate, 1-isocyanato-3,3,5-trimethyl-5-isocyanatomethylcyclohexane (isophorone diisocyanate, IPDI), 2,4- and 2,6-hexahydrotoluylene diisocyanate, hexahydro-1,3- or -1,4-phenylene diisocyanate, benzidine diisocyanate, naphthalene-1,5-diisocyanate, 1,6-diisocyanato-2,2,4-trimethylhexane, 1,6-diisocyanato-2,4,4-trimethylhexane, xylylene diisocyanate (XDI), tetramethylxylylene diisocyanate (TMXDI), 1,3- and 1,4-phenylene diisocyanate, 2,4- or 2,6-toluylene diisocyanate (TDI), 2,4'-diphenylmethane diisocyanate, 2,2'-diphenylmethane diisocyanate, or 4,4'-diphenylmethane diisocyanate (MDI), and the isomeric mixtures thereof. Also suitable are partially or completely hydrogenated cycloalkyl derivatives of MDI, for example completely hydrogenated MDI ($H_{12}$-MDI), alkyl-substituted diphenylmethane diisocyanates, for example mono-, di-, tri-, or tetraalkyldiphenylmethane diisocyanate and the partially or completely hydrogenated cycloalkyl derivatives thereof, 4,4'-diisocyanatophenylperfluorethane, phthalic acid-bis-isocyanatoethyl ester, 1 chloromethylphenyl-2,4- or -2,6-diisocyanate, 1-bromomethylphenyl-2,4- or -2,6-diisocyanate, 3,3'-bis-chloromethyl ether-4,4'-diphenyl diisocyanate, sulfur-containing diisocyanates such as those obtainable by reacting 2 moles diisocyanate with 1 mole thiodiglycol or dihydroxydihexyl sulfide, diisocyanates of dimer fatty acids, or mixtures of two or more of the named diisocyanates.

The polyisocyanate is preferably IPDI, TDI or MDI.

Other polyisocyanates suitable for use in accordance with the invention are isocyanates with a functionality of three or more obtainable, for example, by oligomerization of diisocyanates, more particularly by oligomerization of the isocyanates mentioned above. Examples of such tri- and higher isocyanates are the triisocyanurates of HDI or IPDI or mixtures thereof or mixed triisocyanurates thereof and polyphenyl methylene polyisocyanate obtainable by phosgenation of aniline/formaldehyde condensates.

According to the invention, there is preferably a stoichiometric excess of NCO groups of the polyisocyanates with respect to the hydroxy groups of the polyols, "the polyols" and "the polyisocyanates" in each case also encompassing the presence of only one polyol and/or only one polyisocyanate. This stoichiometric excess must exist under the process conditions; i.e., it is not sufficient when the excess is nominally present, but a portion of the NCO groups of the polyisocyanates reacts with reactants other than the OH groups of the polyols, for example with monofunctional alcohols, so that there is a de facto shortage of NCO groups of the polyisocyanates with respect to the OH groups of the polyols. The ratio of the number of OH groups of the polyols to the number of NCO groups of the polyisocyanates is particularly preferably 1:3 to 1:1.1, in particular 1:2.5 to 1:1.5.

The at least one polymer of the curable composition according to the invention has at least one terminal group of the general formula (I)

$$-A_n\text{-}R\text{-}SiXYZ \qquad (I),$$

wherein A is a divalent bonding group containing at least one heteroatom, R is selected from divalent hydrocarbon residues having 1 to 12 carbon atoms, X, Y, Z are, independently of one another, selected from the group consisting of a hydroxyl group and $C_1$ to $C_8$ alkyl, $C_1$ to $C_8$ alkoxy, and $C_1$ to $C_8$ acyloxy groups, wherein X, Y, Z are substituents directly bound with the Si atom or the two of the substituents X, Y, Z form a ring together with the Si atom to which they are bound, and at least one of the substituents X, Y, Z is selected from the group consisting a hydroxyl group, $C_1$ to $C_8$ alkoxy and $C_1$ to $C_8$ acyloxy groups, and n is 0 or 1.

In this context, the divalent bonding group A comprising at least one heteroatom is understood to be a divalent chemical group which links the polymer backbone of the silane-terminated polymer with the residue R of the formula (I). For example, the divalent linking group A can be formed for example during the production of the alkoxysilane- and/or acyloxysilane-terminated polymer, for example as an amide or urethane group by the reaction of a polyether which is functionalized with hydroxy groups with an isocyanatosilane. In such an embodiment, A may have the structure -O-C(=O)-NH-. similar to Alternatively, a polyether with is terminated with hydroxyl groups may be first reacted with a polyisocyanate, such as a di- or triisocyanate, and the resulting NCO-terminated polymer may then be endcapped with aminosilanes. In such an embodiment, A may have the structure -O-C(=O)-NH-Alkyl/Aryl-NH-C(=O)-NH-. The divalent linking group can be either capable or incapable of being differentiated from structural features occurring in the underlying polymer backbone. The latter is the case, for example, if it is identical with the linking points of the repeating units of the polymer backbone.

The index "n" at each occurrence corresponds to 0 (zero) or 1. That means that A can be present (n=1) or absent (n=0), i.e. the divalent linking group A links the polymer backbone with the residue R (n = 1) or the polymer backbone is bound or linked directly with the residue R (n = 0). In the latter case, this means that A is a bond.

The divalent linking group A in the general formula (I) is preferably an oxygen atom or an -NR"- group, where R" is selected from the group consisting of a hydrogen atom, and alkyl or aryl residues having 1 to 12 carbon atoms, or is a substituted or unsubstituted amide, carbamate, urethane, urea, imino, siloxane, carboxylate, carbamoyl, amidino, carbonate, sulfonate or sulfinate group.

In various embodiments, the polymer backbone may be linked to R and the terminal groups of formula (I) via a moiety A selected from -O-C(=O)-NH-, -NH-C(=O)O- , -NH-C(=O)-NH-, -NR"-C(=O)-NH-, -NH-C(=O)-NR"-, -NH-C(=O)-, -C(=O)-NH-, -C(=O)-O-, -O-C(-O)-, -O-C(=O)-O-, -S-C(=O)-NH-, -NH-C(=O)-S-, -C(=O)-S-, -S-C(=O)-, -S-C(=O)-S-, -C(=O)-, -S-, -O-, and -NR"-, wherein R" can be hydrogen or a hydrocarbon moiety with 1 to 6 carbon atoms, optionally substituted with halogen, preferably $C_1$-$C_2$ alkyl or hydrogen. In such embodiments where A may consist of the afore-mentioned groups R may be a bivalent alkylene group having 1 to 10 carbon atoms, optionally interrupted by a heteroatom, that may be substituted, preferably $-CH_2-$ or $-(CH_2)_3-$. If such alkylene group is present, the full linker -A-R- can be -O-C(=O)-NH-$C_{1-10}$ alkylene- or -O-$C_{1-10}$ alkylene-.

Furthermore, the terminal groups of the polymer backbone, such as hydroxyl groups, may be first functionalized with a polyisocyanate, such as a diisocyanate or triisocyanate, such as those described above in relation to the polyurethane polymer backbones, such that an NCO-terminated polymer is generated. This may then in the next step be reacted with an silane that comprises an NCO-reactive group, such as an amino or hydroxyl group, preferably an aminosilane. In such embodiments, A would then be a moiety of the structure -O-C(=O)-NR"-B-NR"-C(=O)-O-, with B being a hydrocarbon moiety, alkylene or arylene group, as defined herein, preferably with 1 to 12 carbon atoms, depending on the structure of the used polyisocyanate.

Accordingly, in various embodiments, A may comprise two moieties selected from -O-C(=O)-NH-, -NH-C(=O)O-, -NH-C(=O)-NH-, -NR"-C(=O)-NH- , -NH-C(=O)-NR"- , -NH-C(=O)-, -C(=O)-NH- , -C(=O)-O-, -O-C(-O)-, -O-C(=O)-O-, -S-C(=O)-NH-, -NH-C(=O)-S-, -C(=O)-S-, -S-C(=O)-, -S-C(=O)-S-, -C(=O)-, -S-, -O-, and -NR"-, wherein R" can be hydrogen or a hydrocarbon moiety with 1 to 6 carbon atoms, optionally substituted with halogen, preferably $C_1$-$C_2$ alkyl or hydrogen, with these two moieties being linked by a linking group. The linking group may be B, as defined above.

Particularly preferred as linking group A are urethane and urea groups, which can be obtained by reacting certain functional groups of a prepolymer with an organosilane which carries a further functional group. Urethane groups can be formed, for example, either when the polymer backbone comprises terminal hydroxy groups and isocyanatosilanes are used as a further component, or conversely when a polymer having terminal isocyanate groups is reacted with an alkoxysilane comprising terminal hydroxy groups. Similarly, urea groups can be obtained if a terminal primary or secondary amino group - either on the silane or on the polymer - is used, which reacts with a terminal isocyanate group that is present in the respective reactant. This means that either an aminosilane is reacted with a polymer having terminal isocyanate groups or a polymer that is terminally substituted with an amino group is reacted with an isocyanatosilane. As described above, A may comprise two of these functional groups, i.e. two urethane groups, two urea groups or one urethane and one urea group, depending on the chemistry used for linking the silane groups to the polymer backbone.

Urethane and urea groups advantageously increase the strength of the polymer chains and of the overall crosslinked polymer.

The residue R is a divalent hydrocarbon residue having 1 to 12 carbon atoms. The hydrocarbon residue can be a linear, branched or cyclic alkylene residue. The hydrocarbon residue can be saturated or unsaturated. R is preferably a divalent hydrocarbon residue having 1 to 6 carbon atoms. The curing rate of the composition can be influenced by the length of the hydrocarbon residues which form one of the binding links or the binding link between polymer backbone and silyl residue. Particularly preferably, R is a methylene, ethylene or n-propylene group, in particular a methylene or n-propylene residue.

Alkoxysilane-terminated compounds having a methylene group as binding link to the polymer backbone - so-called "alpha-silanes" - have a particularly high reactivity of the terminating silyl group, leading to reduced setting times and thus to very rapid curing of formulations based on these polymers.

In general, a lengthening of the binding hydrocarbon chain leads to reduced reactivity of the polymers. In particular, "gamma-silanes" - which comprise the unbranched propylene residue as binding link - have a balanced ratio between necessary reactivity (acceptable curing times) and delayed curing (open assembly time, possibility of corrections after bonding). By carefully combining alpha- and gamma-alkoxysilane-terminated building blocks, therefore, the curing rate of the systems can be influenced as desired.

Within the context of the present invention, R is most particularly preferably an n-propylene group.

The substituents X, Y and Z are, independently of one another, selected from the group consisting of a hydroxyl group and $C_1$ to $C_8$ alkyl, $C_1$ to $C_8$ alkoxy, and $C_1$ to $C_8$ acyloxy groups, wherein at least one of the substituents X, Y, Z here must be a hydrolyzable group, preferably a $C_1$ to $C_8$ alkoxy or a $C_1$ to $C_8$ acyloxy group, wherein the substituents X, Y and Z are directly bound with the Si atom or the two of the substituents X, Y, Z form a ring together with the Si atom to which they are bound. In preferred embodiments, X, Y and Z are the substituents directly bound with the SI atom. As hydrolyzable groups, preferably alkoxy groups, in particular methoxy, ethoxy, i-propyloxy and i-butyloxy groups, are selected. This is advantageous, since no substances which irritate mucous membranes are released during the curing of compositions comprising alkoxy groups. The alcohols formed by hydrolysis of the residues are harmless in the quantities released, and evaporate. However, acyloxy groups, such as an acetoxy group -O-CO-$CH_3$, can also be used as hydrolyzable groups.

In preferred embodiments, the alkoxy- and/or acyloxysilane-terminated polymer(s) has/have at least two terminal groups of the general formula (I). Each polymer chain thus comprises at least two linking points at which the condensation of the polymers can be completed, splitting off the hydrolyzed residues in the presence of atmospheric moisture. In this way, regular and rapid crosslinkability is achieved so that bonds with good strengths can be obtained. In addition, by means of the quantity and the structure of the hydrolyzable groups - for example by using di- or trialkoxysilyl groups, methoxy groups or longer residues - the configuration of the network that can be achieved as a long-chain system (thermoplastics), relatively wide-mesh three-dimensional network (elastomers) or highly crosslinked system (thermosets) can be controlled, so that *inter alia* the elasticity, flexibility and heat resistance of the finished crosslinked compositions can be influenced in this way.

In preferred embodiments, in the general formula (I), X is preferably an alkyl group and Y and Z are, each independently of one another, an alkoxy group, or X, Y and Z are, each independently of one another, an alkoxy group. In general, polymers comprising di- or trialkoxysilyl groups have highly reactive linking points which permit rapid curing, high degrees of crosslinking and thus good final strengths. The particular advantage of dialkoxysilyl groups lies in the fact that, after curing, the corresponding compositions are more elastic, softer and more flexible than systems comprising trialkoxysilyl groups.

With trialkoxysilyl groups, on the other hand, a higher degree of crosslinking can be achieved, which is particularly

advantageous if a harder, stronger material is desired after curing. In addition, trialkoxysilyl groups are more reactive and therefore crosslink more rapidly, thus reducing the quantity of catalyst required, and they have advantages in "cold flow" - the dimensional stability of a corresponding adhesive under the influence of force and possibly temperature.

Particularly preferably, the substituents X, Y and Z in the general formula (I) are, each independently of one another, selected from a hydroxyl, a methyl, an ethyl, a methoxy or an ethoxy group, at least one of the substituents being a hydroxyl group, or a methoxy or an ethoxy group, preferably a methoxy group. Methoxy and ethoxy groups as comparatively small hydrolyzable groups with low steric bulk are very reactive and thus permit a rapid cure, even with low use of catalyst. They are therefore of particular interest for systems in which rapid curing is desirable.

Interesting configuration possibilities are also opened up by combinations of the two groups. If, for example, methoxy is selected for X and ethoxy for Y within the same alkoxysilyl group, the desired reactivity of the terminating silyl groups can be adjusted particularly finely if silyl groups carrying exclusively methoxy groups are deemed too reactive and silyl groups carrying ethoxy groups not reactive enough for the intended use.

In addition to methoxy and ethoxy groups, it is of course also possible to use larger residues as hydrolyzable groups, which by nature exhibit lower reactivity. This is of particular interest if delayed curing is also to be achieved by means of the configuration of the alkoxy groups.

The total proportion of the polymers with at least one silicone-containing group, preferably at least one end group, of the general formula (I) in the composition according to the invention is preferably 10 to 50 wt.%, more preferably 20 to 40 wt.%, even more preferably 25 to 35 wt.%, based in each case on the total weight of the curable composition.

The curable composition according to the invention optionally comprises as an additional component at least one compound of the general formula (II)

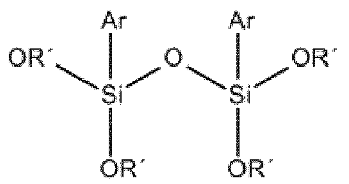 (II)

,

wherein R' is same or different and is, independently from one another, selected from the group consisting of a hydrogen atom and hydrocarbon residues having 1 to 12 carbon atoms, and Ar is selected from aryl groups. In preferred embodiments, the aryl group is a phenyl group and/or R' in the general formula (II) is selected from a methyl or ethyl group, more preferably a methyl group. The most preferred is diphenyltetramethoxydisiloxane.

It has been shown that, when using the at least one compound of the general formula (II) above, the curable compositions according to the invention have an improved tensile strength and elongation. The proportion of compound of the general formula (II) in the curable composition according to the invention is preferably 1 to 30 wt.%, more preferably 2 to 20 wt.%, even more preferably 3 to 15 wt.% based on the total weight of the composition.

The curable composition according to the invention may alternatively or additionally comprise at least one silicone oligomer of the general formula (III)

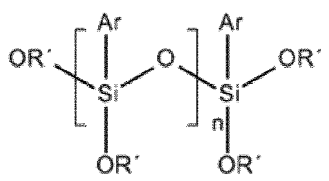 (III)

,

wherein R' is same or different and is, independently from one another, selected from the group consisting of a hydrogen atom and hydrocarbon residues having 1 to 12 carbon atoms, preferably a methyl or ethyl group, more preferably a methyl group, Ar is selected from aryl groups, preferably a phenyl group, and n is an integer selected from 2 to 10, preferably 2 to 4, more preferably 2 to 3, most preferably 3. One example is phenyltrimethoxysilane.

The composition according to the invention further comprises at least one filler. The at least one filler, may, without limitation, be selected from chalk, powdered limestone, silica, such as precipitated and/or pyrogenic silica, zeolites, bentonites, magnesium carbonate, kieselguhr, alumina, clay, tallow, titanium oxide, iron oxide, zinc oxide, sand, quartz, flint, mica, powdered glass and other ground minerals. In preferred embodiments, the filler(s) are precipitated and/or pyrogenic silica. Furthermore, organic fillers can also be used, in particular carbon black, graphite, wood fibers, wood flour, sawdust, cellulose, cotton, pulp, wood chips, chopped straw, chaff, ground walnut shells and other short-cut

fibers. Furthermore, short fibers such as glass fibers, glass filament, polyacrylonitrile, carbon fibers, Kevlar fibers or polyethylene fibers can also be added. Aluminum powder is also suitable as a filler. In addition, hollow spheres with a mineral shell or a plastic shell are suitable as fillers. These can be e.g. hollow glass spheres which are commercially available with the trade names Glass Bubbles®. Plastic-based hollow spheres are commercially available, e.g. with the names Expancel® or Dualite®. These are composed of inorganic or organic substances, each with a diameter of 1 mm or less, preferably of 500 μm or less. Generally, fillers which make the preparations thixotropic are preferred. These fillers are also described as rheological auxiliaries.

The filler(s) are preferably used in a quantity of 1 to 50 wt.%, more preferably 10 to 50 wt.%, for example 20 to 50 wt.% based on the total weight of the composition according to the invention. An individual filler or a combination of several fillers can be used.

In various embodiments, the filler comprises silica, preferably in an amount of 1 to 30, more preferably 1 to 20, even more preferably 5 to 15 wt.-%, relative to the total weight of the composition. The silica may be pyrogenic silica. It has been found that the use of silica either alone or in combination with other fillers is particularly advantageous for the rheological properties of the composition and the mechanical properties of the objected formed therefrom.

For example, a highly disperse silica with a BET surface area (DIN ISO 9277; DIN 66132) of 10 to 500 $m^2/g$ is used as a filler. The use of such a silica may contribute to reinforcing the hardened preparation. By means of this reinforcement, for example the initial strengths and tensile shear strengths of the hardened composition according to the invention are improved. Preferably, coated silicas with a BET surface area of 100 to 400, more preferably 100 to 300, in particular 150 to 300 and most particularly preferably 160 to 300 $m^2/g$, are used. Suitable silicas are for example commercially available from Wacker under the tradename HDK®, including HDK® H18.

In various embodiments, the filler comprises chalk (calcium carbonate), optionally surface coated with fatty acids, preferably in an amount of 25 to 45, more preferably 30 to 40 wt.-%, relative to the total weight of the composition.

Cubic, non-cubic, amorphous and other modifications of calcium carbonate can be used as chalk. Preferably, the chalks used are surface treated or coated. As a coating agent, preferably fatty acids, fatty acid soaps and fatty acid esters are used, for example lauric acid, palmitic acid or stearic acid, sodium or potassium salts of such acids or their alkyl esters. In addition, however, other surface-active substances, such as sulfate esters of long-chain alcohols or alkylbenzenesulfonic acids or their sodium or potassium salts or coupling reagents based on silanes or titanates, are also suitable. The surface treatment of chalks is often associated with an improvement in processability and adhesive strength and also the weathering resistance of the compositions.

Depending on the desired property profile, precipitated or ground chalks or mixtures thereof can be used. Ground chalks can be produced, for example, from natural lime, limestone or marble by mechanical grinding, using either dry or wet methods. Depending on the grinding method, fractions having different average particle sizes can be obtained. Advantageous specific surface area values (BET) are between 1.5 $m^2/g$ and 50 $m^2/g$.

In preferred embodiments, chalk and/or silica, for example both, are used as fillers. In such embodiments where both are used, silica is used in amounts of preferably 5 to 15 wt.% and chalk in amounts of preferably 25-45, more preferably 30-40 wt.%, relative to the total weight of the composition, while not exceeding the upper limit of 50 wt.% fillers in total.

If used, zeolites, preferably alkali aluminosilicates are used, for example sodium-potassium aluminosilicates of the general empirical formula $aK_2O*bNa_2O*Al_2O_3*2SiO*nH_2O$ with $0 < a, b < 1$ and $a + b = 1$. The pore opening of the zeolite or zeolites used is just large enough to accept water molecules. Accordingly, an effective pore opening of the zeolites of less than 0.4 nm is preferred. Particularly preferably, the effective pore opening is 0.3 nm $\pm$ 0.02 nm. The zeolite(s) is/are preferably used in the form of a powder.

The composition according to the invention further comprises at least one catalyst. The at least one catalyst serves as a curing catalyst for the polymers.

In various embodiments, the curing catalyst may be a tin compound, preferably an organotin compound or an inorganic tin salt. Tin in these tin compounds is preferably bivalent or tetravalent. Suitable inorganic tin salts are, for example, tin(II) chloride and tin(IV) chloride. Organotin compounds (tin organyles) are used preferably as the tin compounds, however. Suitable organotin compounds are, for example, the 1,3-dicarbonyl compounds of bivalent or tetravalent tin, for example, the acetylacetonates such as di(n-butyl)tin(IV) di(acetylacetonate), di(n-octyl)tin(IV) di(acetylacetonate), (n-octyl)(n-butyl)tin(IV) di(acetylacetonate); the dialkyl tin(IV) dicarboxylates, for example, di-n-butyltin dilaurate, di-n-butyltin maleate, di-n-butyltin diacetate, di-n-octyltin dilaurate, di-n-octyltin diacetate, or the corresponding dialkoxylates, for example, di-n-butyltin dimethoxide; oxides of tetravalent tin, for example, dialkyltin oxides, such as, for example, di-n-butyltin oxide and di-n-octyltin oxide; and the tin(II) carboxylates such as tin(II) octoate or tin(II) phenolate.

Also suitable are tin compounds of ethyl silicate, dimethyl maleate, diethyl maleate, dioctyl maleate, dimethyl phthalate, diethyl phthalate, dioctyl phthalate, such as, for example, di(n-butyl)tin(IV) di(methyl maleate), di(n-butyl)tin(IV) di(butyl maleate), di(n-octyl)tin(IV) di(methyl maleate), di(n-octyl)tin(IV) di(butyl maleate), di(n-octyl)tin(IV) di(isooctyl maleate); and di(n-butyl)tin(IV) sulfide, $(n\text{-butyl})_2Sn(SCH_2COO)$, $(n\text{-octyl})_2Sn(SCH_2COO)$, $(n\text{-octyl})_2Sn(SCH_2CH_2COO)$, $(n\text{-octyl})_2Sn(SCH_2CH_2COOCH_2CH_2OCOCH_2S)$, $(n\text{-butyl})_2\text{-}Sn(SCH_2COO\text{-}i\text{-}C_8H_{17})_2$, $(n\text{-octyl})_2Sn(SCH_2COO\text{-}i\text{-}$

$C_8H_{17})_2$, and (n-octyl)$_2$Sn($SCH_2COO$-n-$C_8H_{17})_2$.

In some embodiments, the tin compound is selected from 1,3-dicarbonyl compounds of bivalent or tetravalent tin, the dialkyltin(IV) dicarboxylates, the dialkyltin(IV) dialkoxylates, the dialkyltin(IV) oxides, the tin(II) carboxylates, and mixtures thereof.

In various embodiments, the tin compound is a dialkyltin(IV) dicarboxylate, particularly di-n-butyltin dilaurate or di-n-octyltin dilaurate.

Additionally or alternatively, other metal-based condensation catalysts may be used, including, without limitation, compounds of titanium such as organotitanates or chelate complexes, cerium compounds, zirconium compounds, molybdenum compounds, manganese compounds, copper compounds, aluminum compounds, or zinc compounds or their salts, alkoxylates, chelate complexes, or catalytically active compounds of the main groups or salts of bismuth, lithium, strontium, or boron.

Further suitable (tin-free) curing catalysts are, for example, organometallic compounds of iron, particularly the 1,3-dicarbonyl compounds of iron such as, e.g., iron(III) acetylacetonate.

Boron halides such as boron trifluoride, boron trichloride, boron tribromide, boron triiodide, or mixtures of boron halides can also be used as curing catalysts. Particularly preferred are boron trifluoride complexes such as, e.g., boron trifluoride diethyl etherate, which as liquids are easier to handle than gaseous boron halides.

Further, amines, nitrogen heterocycles, and guanidine derivatives are suitable in general for catalysis. An especially suitable catalyst from this group is 1,8-diazabicyclo[5.4.0]undec-7-ene (DBU).

Titanium, aluminum, and zirconium compounds, or mixtures of one or more catalysts from one or more of the just mentioned groups may also be used as catalysts.

Suitable as titanium catalysts are compounds that have hydroxy groups and/or substituted or unsubstituted alkoxy groups, therefore titanium alkoxides of the general formula

$$Ti(OR^z)_4,$$

where $R^z$ is an organic group, preferably a substituted or unsubstituted hydrocarbon group having 1 to 20 C atoms, and the 4 alkoxy groups $-OR^z$ are identical or different. Further, one or more of the $-OR^z$ groups can be replaced by acyloxy groups $-OCOR^z$.

Likewise suitable as titanium catalysts are titanium alkoxides in which one or more alkoxy groups are replaced by a hydroxy group or halogen atoms.

Further, titanium chelate complexes can be used.

Aluminum catalysts can also be used as curing catalysts, e.g., aluminum alkoxides

$$Al(OR^z)_3,$$

where $R^z$ has the above meaning; i.e., it is an organic group, preferably a substituted or unsubstituted hydrocarbon group having 1 to 20 C atoms and the three $R^z$ groups are identical or different. In the case of aluminum alkoxides as well, one or more of the alkoxy groups can be replaced by acyloxy groups - $OC(O)R^z$.

Further, aluminum alkoxides can be used in which one or more alkoxy groups are replaced by a hydroxy group or halogen atoms.

Of the described aluminum catalysts, the pure aluminum alcoholates are preferred in regard to their stability to moisture and the curability of the mixtures to which they are added. In addition, aluminum chelate complexes are preferred.

Suitable as zirconium catalysts are, e.g.: tetramethoxyzirconium or tetraethoxyzirconium.

Diisopropoxyzirconium bis(ethyl acetoacetate), triisopropoxyzirconium (ethyl acetoacetate), and isopropoxyzirconium tris(ethyl acetoacetate) are used with very particular preference.

Further, zirconium acylates can be used, for example.

Halogenated zirconium catalysts can also be used.

Further, zirconium chelate complexes can also be used.

In addition, carboxylic acid salts of metals or also a mixture of a number of such salts can be employed as curing catalysts, whereby these are selected from the carboxylates of the following metals: calcium, vanadium, iron, zinc, titanium, potassium, barium, manganese, nickel, cobalt, and/or zirconium.

Of the carboxylates, the calcium, vanadium, iron, zinc, titanium, potassium, barium, manganese, and zirconium carboxylates are preferred, because they exhibit a high activity. Calcium, vanadium, iron, zinc, titanium, and zirconium carboxylates are particularly preferred. Iron and titanium carboxylates are very particularly preferred.

The curable compositions contain the curing catalyst preferably in an amount of from about 0.01 to 1.0 % by weight, preferably 0.1 to 1.5 % by weight, based in each case on the total weight of the composition. If a mixture of different catalysts is used, the amounts refer to the total amount in the composition.

The compositions of the invention crosslink in the presence of moisture and in so doing cure with the formation of Si-O-Si bonds.

The composition according to the invention may comprise further ingredients in addition to the components mentioned hitherto, which can contribute to the expression of desired properties. These further ingredients may include, without limitation, plasticizers, reactive diluents, adhesion promoters, moisture scavengers, crosslinking agents, and light/UV stabilizers.
A plasticizer is understood to be a substance which reduces the viscosity of the composition and thus makes processing easier, and in addition improves flexibility and extensibility of the compositions.

The plasticizer is preferably selected from a fatty acid ester, a dicarboxylic acid ester (except cyclohexanedicarboxylic acid dialkyl ester), an ester of epoxidized fatty acids or fatty acids carrying OH groups, a fat, a glycolic acid ester, a benzoic acid ester, a phosphoric acid ester, a sulfonic acid ester, a trimellitic acid ester, an epoxidized plasticizer, a polyether plasticizer, a polystyrene, a hydrocarbon plasticizer and a chlorinated paraffin, and mixtures of two or more thereof. By the careful selection of one of these plasticizers or of a specific combination, further advantageous properties of the composition according to the invention, for example gelling properties of the polymers, low-temperature elasticity or low-temperature resistance or antistatic properties, can be achieved.

Among the polyether plasticizers, preferably end-capped polyethylene glycols are used, for example polyethylene or polypropylene glycol di-$C_{1-4}$-alkyl ethers, in particular the dimethyl or diethyl ethers of diethylene glycol or dipropylene glycol, and mixtures of two or more thereof. Also suitable as plasticizers are, for example, esters of abietic acid, butyric acid ester, acetic acid ester, propionic acid ester, thiobutyric acid ester, citric acid ester and esters based on nitrocellulose and polyvinyl acetate, as well as mixtures of two or more thereof. Also suitable are, for example, the asymmetrical esters of adipic acid monooctyl ester with 2-ethylhexanol (Edenol DOA, Cognis Deutschland GmbH, Dusseldorf). In addition, the pure or mixed ethers of monofunctional, linear or branched $C_{4-16}$ alcohols or mixtures of two or more different ethers of such alcohols are suitable as plasticizers, for example dioctyl ether (available as Cetiol OE, Cognis Deutschland GmbH, Düsseldorf). Likewise suitable as plasticizers within the framework of the present invention are diurethanes, which can be produced e.g. by reaction of diols having OH end groups with monofunctional isocyanates, by selecting the stoichiometry so that substantially all free OH groups react fully. Any excess isocyanate can then be removed from the reaction mixture, e.g. by distillation. Another method for producing diurethanes consists in the reaction of monofunctional alcohols with diisocyanates, wherein as far as possible all NCO groups react fully.

In principle, phthalic acid esters can also be used as plasticizers, but because of their toxicological potential these are not preferred.

The total quantity of plasticizer(s) in curable compositions according to the invention is for preference 1 to 30 wt.%, preferably 5 to 25 wt.% and particularly preferably 10 to 20 wt.%, based in each case on the total weight of the curable composition.

Too high a viscosity of the composition according to the invention for certain applications can also be reduced in a simple and useful manner by using a reactive diluent, without signs of separation (e.g. plasticizer migration) appearing in the cured material. The reactive diluent preferably has at least one functional group which reacts with e.g. moisture or atmospheric oxygen after application. Examples of these groups are silyl groups, isocyanate groups, vinylically unsaturated groups and polyunsaturated systems. As reactive diluent, it is possible to use any compounds which are miscible with the composition according to the invention with a reduction of the viscosity and have at least one group that is reactive with the binder, individually or as a combination of several compounds. The viscosity of the reactive diluent is preferably less than 20,000 mPas, particularly preferably about 0.1 - 6000 mPas, most particularly preferably 1 - 1000 mPas (Brookfield RVT, 23°C, spindle 7, 10 rpm).

As reactive diluents it is possible to use for example the following substances: polyalkylene glycols reacted with isocyanatosilanes (for example Synalox 100-50B, DOW), alkyltrimethoxysilane, alkyltriethoxysilane, such as methyltrimethoxysilane, methyltriethoxysilane and vinyltrimethoxysilane (XL 10, Wacker), phenyltrimethoxysilane, phenyltriethoxysilane, octyltrimethoxysilane, tetraethoxysilane, vinyldimethoxymethylsilane (XL12, Wacker), vinyltriethoxysilane (GF56, Wacker), vinyltriacetoxysilane (GF62, Wacker), isooctyltrimethoxysilane (IO Trimethoxy), isooctyltriethoxysilane (IO Triethoxy, Wacker), N-trimethoxysilylmethyl-O-methylcarbamate (XL63, Wacker), N-dimethoxy(methyl)silylmethyl-O-methylcarbamate (XL65, Wacker), hexadecyltrimethoxysilane, 3-octanoylthio-1-propyltriethoxysilane and partial hydrolyzates of these compounds. Furthermore, the following polymers from Kaneka Corp. can also be used as reactive diluents: MS S203H, MS S303H, MS SAT 010 and MS SAX 350. Also suitable as reactive diluents are polymers which can be produced from an organic backbone by grafting with a vinylsilane or by reaction of polyol, polyisocyanate and alkoxysilane.

Suitable as polyols for producing a reactive diluent are e.g. aliphatic alcohols include, for example, ethylene glycol, propylene glycol and higher glycols, as well as other polyfunctional alcohols. The polyols can additionally comprise other functional groups, such as e.g. esters, carbonates, amides. To produce a reactive diluent by reaction of polyol with polyisocyanate and alkoxysilane, the corresponding polyol component is reacted in each case with an at least difunctional isocyanate. Suitable as the at least difunctional isocyanate is in principle any isocyanate having at least two

isocyanate groups, but within the framework of the present invention, compounds having two to four isocyanate groups, in particular two isocyanate groups, are generally preferred. Among the alkoxysilyl groups, the di- and trialkoxysilyl groups are preferred.

The polyisocyanates described above for producing polyurethanes are also suitable as polyisocyanates for producing a reactive diluent.

To reduce the viscosity of the composition according to the invention, solvents can also be used as well as or instead of a reactive diluent. Suitable as solvents are aliphatic or aromatic hydrocarbons, halogenated hydrocarbons, alcohols, ketones, ethers, esters, ester alcohols, keto alcohols, keto ethers, keto esters and ether esters. Preferably, however, alcohols are used since in this case the storage stability increases. $C_1$-$C_{10}$ alcohols are particularly preferred, particularly methanol, ethanol, i-propanol, isoamyl alcohol and hexanol.

The composition according to the invention can additionally comprise an adhesion promoter. An adhesion promoter is understood to be a substance which improves the adhesion properties of adhesive layers on surfaces. It is possible to use conventional adhesion promoters known to the person skilled in the art (tackifiers) individually or as a combination of several compounds. Suitable examples are resins, terpene oligomers, coumarone/indene resins, aliphatic, petrochemical resins and modified phenolic resins. Suitable within the framework of the present invention are, for example, hydrocarbon resins, as obtained by polymerization of terpenes, principally $\alpha$- or $\beta$-pinene, dipentene or limonene. The polymerization of these monomers generally takes place cationically with initiation by Friedel-Crafts catalysts. The terpene resins also include copolymers of terpenes and other monomers, e.g. styrene, $\alpha$-methylstyrene, isoprene and the like. The above resins are used e.g. as adhesion promoters for pressure-sensitive adhesives and coating materials. Also suitable are the terpene-phenolic resins which are produced by acid-catalyzed addition of phenols to terpenes or rosin. Terpene-phenolic resins are soluble in most organic solvents and oils and are miscible with other resins, waxes and rubber. Likewise within the framework of the present invention, the rosins and derivatives thereof, for example their esters or alcohols, are suitable as adhesion promoters in the above sense. Silane adhesion promoters, in particular aminosilanes, are particularly suitable.

In a special embodiment of the curable composition according to the invention, the composition encompasses a silane of the general formula (IV)

$$R^{1'}R^{2'}N\text{-}R^{3'}\text{-}SiXYZ \qquad (IV)$$

as adhesion promoter, wherein R1' and R2' are, independently of one another, a hydrogen or $C_1$ to $C_8$ alkyl residues that may be substituted, in particular with an amino or aminoalkyl group, R3' is a divalent hydrocarbon residue having 1 to 12 carbon atoms, optionally comprising a heteroatom, and X, Y, Z are, each independently of one another, selected from a hydroxyl group or $C_1$ to $C_8$ alkyl, $C_1$ to $C_8$ alkoxy or $C_1$ to $C_8$ acyloxy groups, at least one of the substituents X, Y, Z being a $C_1$ to $C_8$ alkoxy or $C_1$ to $C_8$ acyloxy group. Compounds of this type naturally exhibit a high affinity to the binding polymer components of the curable composition according to the invention, but also to a wide range of polar and nonpolar surfaces, and therefore contribute to the formation of a particularly stable bond between the adhesive composition and the particular substrates to be bonded.

The linking group $R^{3'}$ can, for example, be a linear, branched or cyclic, substituted or unsubstituted alkylene residue. Nitrogen (N) or oxygen (O) may be contained therein as a heteroatom. If X, Y and/or Z are an acyloxy group, this can be e.g., the acetoxy group $-OCO-CH_3$.

Suitable aminosilane adhesion promoters are for example commercially available under the tradename Geniosil® from Wacker, including Geniosil® GF91.

One or more adhesion promoter(s) is/are preferably contained in the curable composition according to the invention in a quantity of 0.1 to 5 wt.%, more preferably 0.2 to 2 wt.%, in particular 0.3 to 1 wt.%, based in each case on the total weight of the composition.

The composition according to the invention can additionally comprise UV stabilizers. Preferably, the proportion of the UV stabilizers in the composition according to the invention is up to about 2 wt.%, in particular up to 1 wt.%. Particularly suitable as UV stabilizers are the so-called hindered amine light stabilizers (HALS). For example, a UV stabilizer can be used which carries a silyl group and is incorporated into the end product during crosslinking or curing. Furthermore, benzotriazoles, benzophenones, benzoates, cyanoacrylates, acrylates, sterically hindered phenols, phosphorus and/or sulfur can also be added. The curable composition according to the invention preferably comprises at least one bis(piperidyl) dicarboxylic acid diester, for example bis(2,2,6,6-tetramethyl-4-piperidyl) sebacate, or a benzotriazol, for example 2-(2*H*-Benzotriazol-2-yl)-4,6-di-*tert*-pentylphenol. Such light stabilizers are available under the tradename Tinuvin® from BASF SE. They are typically used in amounts of 0.01 to 5 wt. %, preferably 0.1 to 3 wt. %, relative to the total weight of the composition.

It is often useful to stabilize the composition according to the invention further against moisture penetration in order to increase the shelf life even more. Such an improvement in shelf life can be achieved, for example, by the use of drying agents. Suitable as drying agent are all compounds that react with water to form a group that is inert towards

the reactive groups present in the composition while undergoing the smallest possible changes in their molecular weight. Furthermore, the reactivity of the drying agents towards moisture that has penetrated into the composition must be higher than the reactivity of the end groups of the silyl group-containing polymer according to the invention present in the composition. Isocyanates, for example, are suitable as drying agent.

Advantageously, silanes are also used as drying agent, e.g. vinylsilanes such as 3-vinylpropyltriethoxysilane, oxime silanes such as methyl-O,O',O"-butan-2-one trioximosilane or O,O',O",O'"-butan-2-one tetraoximosilane (CAS no. 022984-54-9 and 034206-40-1) or benzamidosilanes such as bis(N-methylbenzamido)methylethoxysilane (CAS no. 16230-35-6) or carbamatosilanes such as carbamatomethyltrimethoxysilane. However, the use of methyl-, ethyl- or vinyltrimethoxysilane, tetramethyl- or tetraethylethoxysilane is also possible. Particularly preferred here are vinyltrimethoxysilane and tetraethoxysilane in terms of efficiency and costs. Also suitable as drying agent are the above-mentioned reactive diluents, provided that they have a molecular weight ($M_n$) of less than about 5,000 g/mol and terminal groups whose reactivity with penetrating moisture is at least as great as, preferably greater than, the reactivity of the reactive groups of the silyl group-containing polymer according to the invention. Finally, alkyl orthoformates or orthoacetates can also be used as drying agent, for example methyl or ethyl orthoformate or methyl or ethyl orthoacetate. Generally, the composition according to the invention preferably comprises 0.01 to 10 wt. % drying agent, preferably 0.1 to 5 wt. %, based on the total weight of the composition.

Suitable crosslinking or coupling agents include, without limitation, (methacryloxymethyl)methyldimethoxysilane, (methacryloxypropyl)methyldimethoxysilane, (acryloxymethyl)methyldimethoxysilane, (acryloxypropyl)methyldimethoxysilane, (methacryloxymethyl)trimethoxysilane, (methacryloxypropyl)trimethoxysilane, (acryloxymethyl)trimethoxysilane, (acryloxypropyl)trimethoxysilane, methacryloxytrimethoxysilane, acryloxytrimethoxysilane, for example (methacryloxymethyl)methyldimethoxysilane commercially available from Wacker under the tradename Geniosil® XL32.

The curable composition according to the invention preferably comprises the following components in the stated proportions by weight:

| | |
|---|---|
| at least one polymer having at least one terminal group of the general formula (I) | 10 to 50 wt.%, |
| at least one compound of the general formula (II) | 1 to 30 wt.%, |
| at least one filler | 1 to 50 wt.%, |
| at least one catalyst | 0.01 to 1.0 wt.%, |
| one or more auxiliary substance(s) | 0 to 15 wt.%, |

wherein the proportions by weight add up to 100 wt.% and the proportions by weight are based on the total weight of the curable composition.

The term "auxiliary substances" covers components that are present in minor quantities, for example adhesion promoters, water scavengers, UV stabilizers, reactive diluents, crosslinkers, anti-ageing agents, rheological auxiliaries, pigments or pigment pastes, fungicides, flame retardants and/or solvents.

In preferred embodiments, the curable composition according to the invention preferably comprises the following components in the stated proportions by weight:

| | |
|---|---|
| at least one polymer having at least one terminal group of the general formula (I) | 10 to 50 wt.%, |
| at least one compound of the general formula (II) | 1 to 30 wt.%, |
| at least one filler | 1 to 50 wt.%, |
| at least one catalyst | 0.01 to 1.0 wt.%, |
| at least one moisture scavenger | 0.1 to 5.0 wt.%, |
| at least one adhesion promoter | 0.2 to 2.0 wt.% |
| at least one light stabilizer | 0.1 to 3.0 wt.%, |
| one or more auxiliary substance(s) | 0 to 10 wt.%, |

wherein the proportions by weight add up to 100 wt.% and the proportions by weight are based on the total weight of the curable composition.

With regard to the preferred representatives of the individual components and the preferably used quantities thereof, the statements made above in the description of the respective components apply.

The production of the composition according to the invention takes place by known methods by intimate mixing of the components in suitable dispersing apparatus, for example a high-speed mixer. Alternatively or additionally, the composition may be compounded. Compounding may be achieved in a reactor or preferably by extrusion. For example, the compounding may be achieved by extrusion using a twin screw with a multifeeder system.

The compositions of the invention are in form of a paste. These pastes are preferably shear-thinning and/or

thixotropic, i.e. their viscosity is decreased when subjected to shear forces. The pastes typically have a yield point, i.e. at room temperature (20°C) and standard pressure (1013 mbar) they substantially do not flow or creep as long as there are no external forces applied, such as shear forces. Such a yield point ensures that the material once extruded to form a 3D object is stable enough to maintain the form until curing is completed.

The decrease is preferably such that they are extrudable by typical equipment for 3D printing applications in which viscous liquids are used. This may, for example, mean that when subjected to shear forces the ratio of the viscosity of the composition at a shear rate of 1/s to the viscosity at a shear rate of 5/s at 25°C is at least 2.0, preferably 2.5 or more, more preferably 3.0 or more. In various embodiments, the compositions of the invention show shear-thinning/thixotropic behaviour when subjected to shear forces such that the ratio of the viscosity of the composition at a shear rate of 1/s to the viscosity at a shear rate of 10/s at 25°C is at least 2, preferably 4.0 or more, more preferably 5.0 or more. In various embodiments, the compositions of the invention show shear-thinning/thixotropic behaviour when subjected to shear forces such that the ratio of the viscosity of the composition at a shear rate of 1/s to the viscosity at a shear rate of 40/s at 25°C is at least 5.0, preferably 7.0 or more, more preferably 10.0 or more. Viscosities as described herein if not explicitly indicated otherwise, are determined using MCR302 rheometer from Anton-Paar GmbH using the method as set forth in BS EN ISO 3219:1995. Specifically, the measuring conditions are as follows: Geometry: 25mm plate/plate geometry; Gap: 0,25mm, F=0N, under nitrogen, 25°C, Shear rate 0.3-40$s^{-1}$. For extrapolation Casson's model was used.

While there is principally no upper limit, it may be preferred that the shear-thinning/thixotropic properties are not such that the ratio of the viscosity of the composition at a shear rate of 1/s to the viscosity at a shear rate of 10/s at 25°C exceeds 100, preferably not exceeds 50, more preferably not exceeds 30.

It is furthermore a property of the compositions of the invention that they have a yield stress (Casson yield stress (value)) of greater than 50, preferably 100 or more, more preferably 150 or more. Even more preferred are values exceeding 200, exceeding 500 or exceeding 1000. These values refer to the respective values at 25°C.

The yield stress can be calculated using the formula:

$$\tau^{\frac{1}{2}} = k_{oc}^{\frac{1}{2}} + k_c^{\frac{1}{2}}\gamma^{\frac{1}{2}}$$

Wherein $\tau$ is the shear stress, $k_{oc}$ is the Casson yield stress, $k_c$ is the Casson plastic viscosity and $\gamma$ is the shear rate. In a graphic representation of the square root of $\tau$ (shear stress) against the square root of $\gamma$ (shear rate), the square root of $k_c$ is thus the slope and the square root of $k_{oc}$ the intercept.

Shear rate and shear stress are measured/determined using BS EN ISO 3219:1995. Specifically, the measuring conditions are as follows: Geometry: 25mm plate/plate geometry; Gap: 0,25mm, F=0N, under nitrogen, 25°C, Shear rate 0.3-40$s^{-1}$. For extrapolation Casson's model was used.

The plastic viscosity preferably ranges between 1 and 30.

The desired rheological properties of the compositions can be controlled via the amounts of components, as defined above, in particular the type and amounts of fillers used.

The compositions of the invention can be used as 3D printing materials.

The compositions of the invention can further be used in methods for manufacturing a three-dimensional part by additive manufacturing (3D printing), the method comprising:

(a) printing a moisture-curable printable composition according to the invention in a layer-by-layer manner to form the three-dimensional part; and
(b) curing the printed layers of the moisture-curable printable composition to obtain the three-dimensional part.

The method may comprise printing a first layer of the material and then printing subsequent layers on top of the already printed layers to form a 3D object. Curing can occur once the material has been printed, for example directly after the material leaves the printing device or once the complete form has been printed. As curing speeds are typically low, curing can start once the material is printed and may continue even after the printing is completed. As described above, curing is typically achieved by exposure to atmospheric moisture, but is not limited thereto.

The printing is typically achieved by extrusion, for example through a nozzle or orifice of a printhead in form of a filament or strand. The paste may be transported to the printhead by any suitable means, such as a screw-conveyor or other means known to those skilled in the art. Due to the shear forces that act on the composition during transport and extrusion/printing, the viscosity is lowered to such a degree that the composition is printable with the selected device but increases once the layer has been formed such that the formed object retains its form even before curing is completed. The printing/extrusion may include heating the composition and/or the printhead. Typical composition temperatures for printing/extrusion range from about 10°C to about 120°C, typically from about 20 to about 100°C. In some embodiments,

temperatures in the range of 20 to 40 or 55 to 85°C may be preferred.

The composition in paste form may be used directly in a 3D printer. For this purpose, the composition may be provided in a cartridge.

In principle, in the present invention, all features mentioned in the context of the present text, in particular the embodiments, ranges of proportions, components and other features of the composition according to the invention and of the uses according to the invention shown as preferred and/or special can be implemented in all possible and not mutually exclusive combinations, with combinations of features shown as preferred and/or special also being regarded as preferred and/or special. All embodiments disclosed for the compositions per se can similarly be applied to the uses and methods described herein and vice versa.

## EXAMPLES

*Synthesis of diphenyltetramethoxydisiloxane*

Phenyltrimethoxysilane (195.2 g) was placed in a 3 neck round bottom flask (0.5 L) equipped with a magnetic stirring bar a thermometer and a dropping funnel. 1 N Hydrochloric acid (8.8 g with a molar ratio of water:methoxy 6:1) was added dropwise to the silane over a period of 7 h, whereby the temperature of the mixture was not allowed to exceed 40 °C. The mixture was left stirring at 600 RPM for 10 h after which the reaction was stopped and the mixture stored at 25 °C for at least one day prior distillation. Conversion of the reaction after removal of the starting materials was 76%. Purification of the reaction mixture occurred via vacuum distillation. At a vacuum of 1 mbar two fractions were isolated. The first fraction came at 130 °C and contained unreacted phenyltrimethoxysilane. The second fraction was isolated at 230 °C and contained the desired product 1,2-diphenyltetramethoxydisiloxane (36% yield).

*General procedure for manufacturing the polymer*

Polymer 1 (gamma-silane-terminated polymer): 282 g (15 mmol) of polypropylene glycol 18000 (hydroxyl value = 6.0) was dried in a 500 ml three-neck flask at 80-90°C under vacuum. Under a nitrogen atmosphere at 80°C, 0.1 g of dibutyltin laurate was added, and 7.2 g (32 mmol) 3-isocyanatopropyltrimethoxysilane (%NCO = 18.4) was then added to it. After stirring for one hour at 80°C, the resulting polymer was cooled. After adding 3 g light stabilizer (Tinuvin 770 DF) and 6 g Geniosil XL 10 to the reactor while stirring and homogenizing for 10-30 minutes at 80°C, the resulting polymer was stored in a moisture-proof glass vessel under a nitrogen atmosphere before being processed further into a curable composition.

*Example 1*

The polymer, polyol, the additive, the filler, and the light stabilizer were mixed by combining them and stirring (for 10 minutes under nitrogen). In a next step, moisture scavenger was added and stirring was continued first without (3 minutes) and then under vacuum (12 minutes). Then adhesion promoter was added and stirring was continued first without (1 minute) and then under vacuum (10 minutes). Finally, the catalyst was added and stirring was continued first without (1 minute) and then under vacuum (15 minutes). All mixing was done under nitrogen atmosphere. The prepared formulations are shown in Table 1.

Table 1: Formulations (amounts in wt.% relative to total composition weight)

| | 214 | 215 | 216 | 217 | 218 | 219 |
|---|---|---|---|---|---|---|
| Polymer 1 | 31.5 | 46.5 | 46.5 | 31.5 | 31.5 | 51.5 |
| Bis Ph-TMO (1,2-Diphenyltetramethoxydisiloxane) | 15.0 | - | - | - | 15.0 | 15.0 |
| Phenyltrimethoxysilane | - | - | - | 15.0 | - | - |
| PPG 2000 (Acclaim polypropylene glycol, OH-terminated) | 14.8 | 14.8 | 14.8 | 14.8 | 14.8 | 14.8 |
| DBTL | 0.2 | 0.2 | 0.2 | 0.2 | 0.2 | 0.2 |
| Tinuvin 328 (light stabilizer) | 0.5 | 0.5 | 0.5 | 0.5 | 0.5 | 0.5 |
| Geniosil XL10 (Vinyltrimethoxysilane) | 2.0 | 2.0 | 2.0 | 2.0 | 1.0 | 2.0 |
| Geniosil XL32 (Methacryloxymethyl)methyldimethoxysilane | - | - | - | - | 1.0 | 1.0 |
| Geniosil GF91 (adhesion promoter) | 1.0 | 1.0 | 1.0 | 1.0 | 1.0 | - |

(continued)

| | 214 | 215 | 216 | 217 | 218 | 219 |
|---|---|---|---|---|---|---|
| Chalk (Viscoexcel 30-SG) | 35.0 | 35.0 | 30.0 | 35.0 | 35.0 | 15.0 |
| Silica (HDK H18) | - | - | 5.0 | - | - | - |
| Bis Ph-TMO: (Diphenyltetramethoxydisiloxane)<br>DBTL: Dibutyltindilaurate<br>Adhesion promoter: N-(2-aminoethyl)-3-aminopropyltrimethoxysilane<br>Example 219 is a comparative example.<br>Examples 214 to 218 are according to the invention. | | | | | | |

*Example 2*

The formulations of Table 1 were analysed by determining their viscosity and shear stress at increasing shear rates from 0.3/s to 40/s at 25°C in an Anton-Paar rheometer MCR 302 according to BS EN ISO 3219:1995 From the obtained values, yield stress and plastic viscosity were calculated using the formula:

$$\tau^{\frac{1}{2}} = k_{oc}^{\frac{1}{2}} + k_{c}^{\frac{1}{2}}\gamma^{\frac{1}{2}}$$

Table 2: Rheological properties of formulations 214-219

| | 214 | 215 | 216 | 217 | 218 | 219 |
|---|---|---|---|---|---|---|
| Viscosity at 1/s (mPa·s) | 269.830 | 373.900 | 2.051.000 | 285.380 | 273.380 | 21.587 |
| Viscosity at 5/s (mPa·s) | 82.578 | 132.950 | 503.900 | 74.085 | 81.038 | 13.391 |
| Viscosity at 10/s (mPa·s) | 51.916 | 93.266 | 280.190 | 39.716 | 51.715 | 11.597 |
| Viscosity at 40/s (mPa·s) | 24.841 | 53.029 | 94.234 | 15.967 | 23.521 | 9.293 |
| Ratio 1/5 | 3,27 | 2,81 | 4,07 | 3,85 | 3,37 | 1,61 |
| Ratio 1/10 | 5,20 | 4,01 | 7,32 | 7,19 | 5,29 | 1,86 |
| Ratio 1/40 | 10,86 | 7,05 | 21,76 | 17,87 | 11,62 | 2,32 |
| Yield stress (value) | 202.15 | 223.80 | 1880.70 | 242.89 | 212.02 | 4.47 |
| Plastic viscosity | 7.64 | 24.13 | 11.01 | 2.16 | 6.51 | 7.39 |

## Claims

**1.** A moisture-curable printable composition comprising

a) at least one polymer having at least one terminal group of the general formula (I)

$-A_n-R-SiXYZ$ (I),

wherein

A is a divalent bonding group containing at least one heteroatom,
R is selected from divalent hydrocarbon residues having 1 to 12 carbon atoms, X, Y, Z are, independently of one another, selected from the group consisting of a hydroxyl group and $C_1$ to $C_8$ alkyl, $C_1$ to $C_8$ alkoxy, and $C_1$ to $C_8$ acyloxy groups, wherein X, Y, Z are substituents directly bound with the Si atom or the two of the substituents X, Y, Z form a ring together with the Si atom to which they are bound, and at least one

of the substituents X, Y, Z is selected from the group consisting of a hydroxyl group, $C_1$ to $C_8$ alkoxy and $C_1$ to $C_8$ acyloxy groups, and
each n is independently 0 or 1; and

b) optionally at least one compound of the general formula (II)

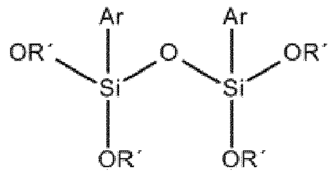

(II)

,

wherein R' is same or different and is, independently from one another, selected from the group consisting of a hydrogen atom and hydrocarbon residues having 1 to 12 carbon atoms, and Ar is selected from aryl groups;
c) at least one filler; and
d) at least one catalyst,

wherein the composition is in form of a paste and has a yield stress of greater than 50, preferably 100 or more, more preferably 150 or more.

**2.** The moisture-curable printable composition according to claim 1, wherein the at least one polymer a)

(1) has at least two terminal groups of the general formula (I);
(2) has a polyoxyalkylene backbone, preferably a polypropylene backbone;
(3) X, Y, and Z are, independently of one another, selected from a hydroxyl, a methyl, an ethyl, a methoxy, or an ethoxy group, wherein at least one of the substituents is a hydroxyl group, or a methoxy or an ethoxy group, preferably all are selected from methoxy or ethoxy, more preferably methoxy;
(4) R in the general formula (I) is selected from a methylene, ethylene, or n-propylene group; and/or
(5) A is an oxygen atom or an -NR"- group, where R" is selected from the group consisting of a hydrogen atom, and alkyl or aryl residues having 1 to 12 carbon atoms, or is a substituted or unsubstituted amide, carbamate, urethane, urea, imino, siloxane, carboxylate, carbamoyl, amidino, carbonate, sulfonate or sulfinate group or a moiety comprising at least one of these groups, preferably a urea and/or urethane group.

**3.** The moisture-curable printable composition according to claim 1 or 2, wherein in the general formula (II)

(1) Ar is a phenyl group; and/or
(2) R' is selected from a methyl or ethyl group, preferably a methyl group.

**4.** The moisture-curable printable composition according to any one of the preceding claims, wherein the composition comprises, relative to the total weight of the composition,

(1) 10 to 50 wt.-%, preferably 20 to 40 wt.-%, more preferably 25 to 35 wt.-%, of the at least one polymer a);
(2) 1 to 30 wt.-%, preferably 2 to 20 % wt.-%, more preferably 3 to 15 wt.-% of the at least one compound of the general formula (II);
(3) 1 to 50 wt.-%, preferably 10 to 50 wt.-%, more preferably 20 to 50 wt.-% of the at least one filler c); and/or
(4) 0.01 to 1.0 wt.-% of the at least one catalyst (d).

**5.** The moisture-curable printable composition according to any one of the preceding claims, wherein the filler comprises silica, preferably in an amount of 1 to 30, more preferably 1 to 20, even more preferably 5 to 15 wt.-%, relative to the total weight of the composition.

**6.** The moisture-curable printable composition according to any one of the preceding claims, wherein the filler comprises calcium carbonate, optionally surface coated with fatty acids, preferably in an amount of 25 to 45, more preferably 30 to 40 wt.-%, relative to the total weight of the composition.

**7.** The moisture-curable printable composition according to any one of the preceding claims, wherein the composition

further comprises at least one compound selected from the group consisting of plasticizers, reactive diluents, adhesion promoters, moisture scavengers, crosslinking agents, and light/UV stabilizers.

**8.** The moisture-curable printable composition according to any one of the preceding claims, wherein the composition further comprises at least one crosslinker, preferably selected from polyols, more preferably in an amount of 0.01 to 20 wt.-%.

**9.** Method for manufacturing a three-dimensional part by extruded filament fabrication, the method comprising:

(c) printing a moisture-curable printable composition according to any one of the preceding claims in a layer-by-layer manner to form the three-dimensional part;
(d) curing the printed layers of the moisture-curable printable composition to obtain the three-dimensional part.

**10.** Use of a moisture-curable printable composition according to any one of claims 1 to 8 as a 3D printing material.

Europäisches Patentamt
European Patent Office
Office européen des brevets

# EUROPEAN SEARCH REPORT

Application Number
EP 19 17 4118

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/216045 A1 (HENKEL AG & CO KGAA [DE]) 21 December 2017 (2017-12-21)<br>* claims 1,10,11 *<br>----- | 1-8 | INV.<br>B29C64/106<br>B33Y10/00<br>B33Y70/00<br>C08L43/04<br>C08L71/02<br>C08L101/10<br>C09K3/10 |
| X | JP 2014 240477 A (CEMEDINE CO LTD) 25 December 2014 (2014-12-25)<br>* claim 1 *<br>* paragraph [0104] *<br>* paragraph [0113] - paragraph [0116] *<br>* tables 1,2 *<br>----- | 1,2,4-8 | |
| X | WO 2018/005350 A1 (DOW GLOBAL TECHNOLOGIES LLC [US]) 4 January 2018 (2018-01-04)<br>* claims 1,3,16 *<br>* page 5, line 14 - page 6, line 16 *<br>* page 4, line 16 - line 28 *<br>* page 8, line 9 - line 25 *<br>* page 22, line 5 - page 27, line 8 *<br>----- | 1-10 | |
| A | Edward M Petrie: "MS Polymers in "Hybrid" Sealants",<br>The Adhesive and Sealant Council, Inc., 1 January 2010 (2010-01-01), pages 1-8, XP055251044,<br>Retrieved from the Internet:<br>URL:http://www.adhesives.org/docs/default-document-library/hybrid_sealants_may2010-final-%281%29.pdf<br>[retrieved on 2016-02-17]<br>* the whole document *<br>----- | 1,2 | TECHNICAL FIELDS SEARCHED (IPC)<br>G02F<br>B33Y<br>C09J<br>B29C<br>C08L<br>C09K<br>C08K |

The present search report has been drawn up for all claims

| Place of search | Date of completion of the search | Examiner |
|---|---|---|
| The Hague | 31 October 2019 | Costantini, Nicola |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 19 17 4118

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2019

| Patent document cited in search report | Publication date | Patent family member(s) | Publication date |
|---|---|---|---|
| WO 2017216045 A1 | 21-12-2017 | CN 109312111 A | 05-02-2019 |
| | | EP 3469019 A1 | 17-04-2019 |
| | | US 2019100618 A1 | 04-04-2019 |
| | | WO 2017216045 A1 | 21-12-2017 |
| JP 2014240477 A | 25-12-2014 | NONE | |
| WO 2018005350 A1 | 04-01-2018 | CN 109414912 A | 01-03-2019 |
| | | EP 3475081 A1 | 01-05-2019 |
| | | JP 2019519404 A | 11-07-2019 |
| | | US 2019233335 A1 | 01-08-2019 |
| | | WO 2018005350 A1 | 04-01-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *CHEMICAL ABSTRACTS,* 022984-54-9
- *CHEMICAL ABSTRACTS,* 16230-35-6